# FASCICULE DE BREVET EUROPEEN

(11) **EP 2 002 031 B1**
(45) Date de publication et mention de la délivrance du brevet: **04.12.2013**
(21) Numéro de dépôt: 07731861.6
(22) Date de dépôt: 03.04.2007
(51) Int. Cl.: C23C 28/04, C23C 16/24, C23C 16/02, C23C 16/30, F01D 5/28, C04B 41/00

(54) **PIECE EN MATERIAU COMPOSITE A MATRICE CERAMIQUE CONTENANT DU SILICIUM, PROTEGEE CONTRE LA CORROSION**
KORROSIONSGESCHÜTZTES VERBUNDWERKSTOFFBAUTEIL MIT SILICIUMHALTIGER KERAMIKMATRIX
COMPOSITE MATERIAL COMPONENT WITH SILICON-CONTAINING CERAMIC MATRIX, PROTECTED AGAINST CORROSION

(30) Priorité: 04.04.2006 FR 0651180
(43) Date de publication de la demande: 17.12.2008
(73) Titulaire: HERAKLES, 33185 Le Haillan (FR)
(72) Inventeur: LOUCHET-POUILLERIE, Caroline, F-33460 Arsac (FR); BOUILLON, Eric, F-33400 Talence (FR); TAWIL, Henri, F-33110 Le Bouscat (FR); GUELDRY, Gérard, F-91000 Evry (FR); BOUVIER, Rémi, F-33700 Merignac (FR)
(74) Mandataire: Joly, Jean-Jacques
(86) Numéro de dépôt international: PCT/FR2007/051057
(87) Numéro de publication internationale: WO 2007/116176

(56) Documents cités:
- US-A1- 2004 151 840
- US-B1- 6 699 607
- US-B1- 6 733 908
- BASU ET AL: "Formation of mullite coatings on silicon-based ceramics by chemical vapor deposition" INTERNATIONAL JOURNAL OF REFRACTORY METALS AND HARD MATERIALS, ELSEVIER PUBLISHERS, BARKING, GB, vol. 16, no. 4-6, 1998, pages 343-352, XP005026087 ISSN: 0263-4368
- HOU P ET AL: "Structure and high-temperature stability of compositionally graded CVD mullite coatings" INTERNATIONAL JOURNAL OF REFRACTORY METALS AND HARD MATERIALS, ELSEVIER PUBLISHERS, BARKING, GB, vol. 19, no. 4-6, juillet 2001 (2001-07), pages 467-477, XP004381964 ISSN: 0263-4368

## Description

### Arrière-plan de l'invention

La présente invention concerne la protection contre la corrosion de pièces en matériau composite à matrice céramique (CMC) contenant du silicium, notamment les pièces en matériau CMC à matrice en carbure de silicium (SiC). Un domaine particulier, mais non exclusif, d'application de l'invention est celui de pièces de parties chaudes de turbines à gaz, telles que des parois de chambres de combustion, notamment pour des moteurs aéronautiques.

Pour de telles turbines à gaz, le souci d'améliorer le rendement et de diminuer les émissions polluantes conduit à envisager des températures toujours plus élevées dans les chambres de combustion.

Il a donc été proposé de remplacer les matériaux métalliques par des matériaux CMC, notamment pour les parois de chambres de combustion. En effet, les matériaux CMC sont connus pour présenter à la fois de bonnes propriétés mécaniques permettant leur utilisation pour des éléments de structure, et pour conserver ces propriétés à des températures élevées. Les matériaux CMC comportent un renfort fibreux en fibres réfractaires, typiquement en carbone ou en céramique, qui est densifié par une matrice céramique, typiquement en SiC.

En présence d'un environnement corrosif (atmosphère oxydante, notamment en présence d'humidité et/ou d'atmosphère saline), un phénomène de récession de surface est observé avec les matériaux CMC à matrice SiC en raison de la volatilisation de la silice (SiO₂) qui se forme par oxydation à la surface du matériau CMC.

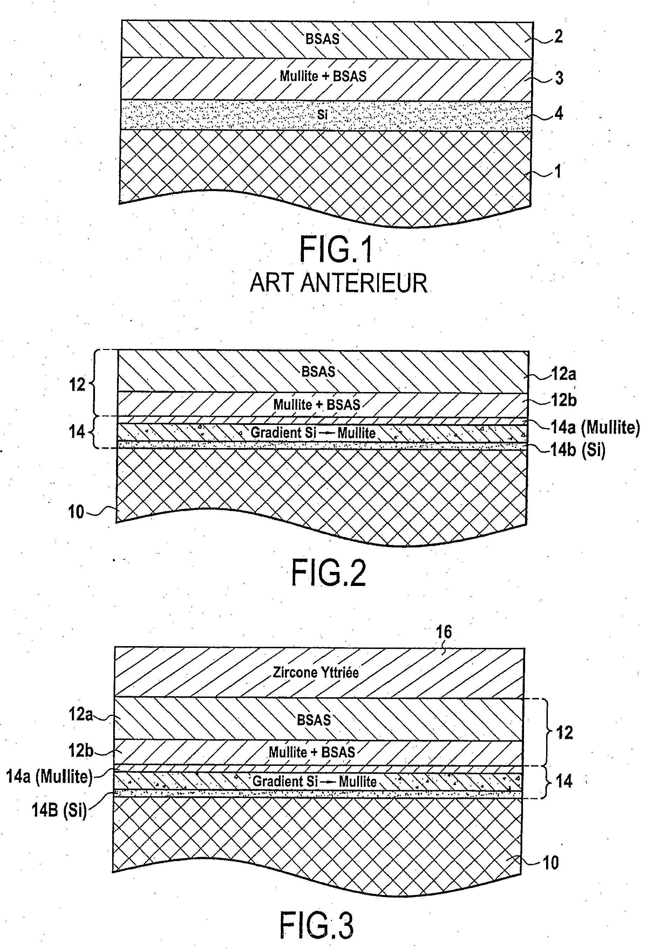

La formation d'une barrière environnementale à la surface du matériau CMC a été préconisée. La figure 1 illustre très schématiquement, en coupe, une telle barrière connue pour un substrat 1 en matériau CMC à matrice SiC. La fonction anti-corrosion est apportée par une couche 2 en un composé de type aluminosilicate de métal alcalino-terreux, tel que le composé BaO_{0,75}.SrO_{0,25}.Al₂O₃(SiO₂)₂ désigné couramment sous l'abréviation BSAS. Une couche. 3 de barrière chimique est interposée entre la couche de BSAS et le substrat pour éviter des interactions chimiques entre BSAS et SiC du substrat. La couche 3 comporte typiquement une association de mullite (majoritaire) et de BSAS, la présence de BSAS réduisant la sensibilité à la fissuration en comparaison avec une couche de mullite seule. Une sous-couche 4 de silicium (Si) est formée sur le substrat pour faciliter l'accrochage de la couche de barrière chimique 3. Les documents US 2004/0151840, US 6 866 897 et US 6 787 195, entre autres, illustrent un tel état de la technique.

Une telle barrière environnementale a montré des défaillances.

Lorsque la température atteint des valeurs élevées, typiquement au-delà de 1300°C environ, une récession de surface de la couche de BSAS peut être observée par volatilisation de la silice contenue dans cette couche. On peut y remédier en augmentant l'épaisseur de la couche de BSAS pour obtenir une durée de vie souhaitée. Une autre solution consiste à munir la barrière environnementale d'une couche externe de protection thermique, notamment en zircone stabilisée à l'yttrium (ou zircone yttriée), comme décrit par exemple dans les documents US 6 740 364, US 6 558 814, US 6 699 607, US 6 607 852, EP 1 416 066 et EP 1 142 850. En outre, à ces températures élevées, une dégradation est produite par interaction chimique entre BSAS contenu dans la couche de barrière chimique et Si de la sous-couche d'accrochage sur le substrat. Pour y remédier, une couche de mullite seule peut être interposée entre la sous-couche d'accrochage en Si et la couche de barrière chimique en mullite + BSAS, comme décrit notamment dans les documents US 6 759 151 et US 6 733 908.

La déposante a de plus observé que la couche d'accrochage chimique en Si est sensible à la fissuration provoquée par des chocs thermiques, ce qui peut conduire à la décohésion de la barrière environnementale.

La formation d'un revêtement en mullite à gradient de composition sur un substrat contenant du silicium, notamment un substrat en SiC est décrite dans un article de Basu et al. « Formation of mullite coatings ,on silicon-based ceramics by chemical vapor deposition » et dans un article de Hou et al. « Structure and high temperature stability of compositionally graded CVD mullite coatings » parus dans « International Journal of Refractory Metals and Hard Metals, Elsevier Publishers, Barking, GB, respectivement Vol. 16, n° 4-6, 1998, pages 343-352 et Vol. 19, n° 4-6, juillet 2001, pages 467-477. Le revêtement de mullite est formé par dépôt chimique en phase vapeur, ou CVD ("Chemical Vapor Déposition »). La composition du revêtement varie d'une phase riche en silice, à proximité du substrat, à une phase riche en alumine à la surface extérieure, la phase riche en alumine remplissant la fonction anti-corrosion.

### Objet et résumé de l'invention

L'invention a pour but de fournir des pièces formées d'un substrat en matériau CMC contenant du silicium qui puissent être utilisées de façon durable en atmosphère corrosive et à des températures élevées pouvant dépasser 1300°C.

Ce but est atteint grâce à une pièce comportant un substrat en matériau composite à matrice céramique contenant du silicium et une barrière environnementale formée sur le substrat et comprenant une couche extérieure de protection anti-corrosion contenant un composé du type aluminosilicate d'élément alcalin ou alcalino-terreux ou de terre rare, et une sous-couche d'accrochage contenant du silicium et formée sur le substrat, pièce dans laquelle, entre le substrat et la couche de protection anti-corrosion est formée une sous-couche d'accrochage dont la composition évolue de silicium sensiblement pur à mullite sensiblement pure entre une face interne, du côté du substrat, et une face externe, avec décroissance de la teneur en silicium et croissance de la teneur en mullite.

Par mullite sensiblement pure, on entend bien entendu ici la mullite sensiblement stoechiométrique (3Al₂O₃ - 2SiO₂).

En raison de sa composition évolutive, une telle sous-couche d'accrochage est peu sensible à la fissuration due notamment aux chocs thermiques. Elle remplit en outre la fonction d'accrochage chimique sur le substrat par sa face interne en silicium et la fonction de barrière chimique par sa face externe en mullite, la fonction anti-corrosion étant apportée par la couche extérieure formée sur la face externe en mullite de la sous-couche.

Pour mieux garantir l'absence d'interaction chimique entre le Si de la sous-couche d'accrochage et un ou des composés contenus dans une couche de la barrière environnementale surmontant la sous-couche d'accrochage, celle-ci peut se terminer, du côté de sa face externe, par une couche mince de mullite sensiblement pure ayant, de préférence, une épaisseur au plus égale à 50 µm.

Du côté de sa face interne, la sous-couche d'accrochage peut débuter par une couche mince de silicium sensiblement pur formée sur le substrat. Une telle couche mince favorise l'accrochage chimique sur le substrat sans que son épaisseur nécessite d'être importante. De préférence, cette épaisseur est inférieure à 50 µm, ce qui, en association avec le gradient de composition de la sous-couche d'accrochage, minimise le risque de fissuration sous l'effet de contraintes thermiques.

Il est possible, de façon connue en soi, de compléter la barrière environnementale par une couche de protection thermique formée sur la couche extérieure de protection anti-corrosion.

Par ailleurs, la barrière environnementale pourra comporter une couche de protection anti-corrosion formée par un composé du type aluminosilicate d'élément alcalin ou alcalino-terreux ou de terre rare et une couche sous-jacente formée au-dessus de la sous-couche d'accrochage et comportant une association de ce composé avec de la mullite. Cette couche sous-jacente pourra avoir une composition qui évolue entre mullite sensiblement pure au voisinage d'une face interne située du côté de la sous-couche d'accrochage, et sensiblement uniquement le composé formant la couche de protection anti-corrosion au voisinage d'une face externe située du côté de cette couche de protection anti-corrosion, avec décroissance de la teneur en mullite et croissance de la teneur en ledit composé.

Avantageusement, une pièce conforme à l'invention constitue un composant de partie chaude de turbine à gaz, notamment pour moteur aéronautique, telle qu'une partie de paroi de chambre de combustion.

### Brève description des dessins

D'autres particularités et avantages de l'invention ressortiront à la lecture de la description faite ci-après, à titre indicatif mais non limitatif. Il sera fait référence aux dessins annexés, sur lesquels :
- la figure 1 illustre très schématiquement et en coupe une barrière environnementale formée sur un substrat en matériau CMC à matrice SiC selon l'art antérieur ;
- la figure 2 illustre très schématiquement et en coupe un mode de réalisation d'une pièce selon l'invention ayant une barrière environnementale formée sur un substrat en matériau CMC contenant du silicium ;
- les figures 3 à 5 sont des vues en coupe illustrant des variantes de réalisation de la barrière environnementale de la figure 2 ;
- les figures 6 et 7 sont deux vues au microscope électronique à balayage d'une coupe d'une barrière environnementale réalisée conformément à l'invention et d'une barrière environnementale selon l'art antérieur, après exposition à des chocs thermiques; et
- les figures 8 à 10 sont des vues au microscope électronique à balayage de coupes de barrière environnementale selon l'invention après essais en corrosion et en fatigue.

### Description détaillée de modes de réalisation

La figure 2 montre très schématiquement un substrat 10 muni d'une barrière environnementale selon un mode de réalisation de la présente invention.

Le substrat 10 est en un matériau CMC contenant du silicium. Le renfort fibreux du matériau CMC peut être en fibres de carbone (C) ou en fibres de céramique, notamment en fibres SiC. La matrice du matériau CMC est constituée par un composé de Si, notamment SiC ou un système ternaire Si-B-C, dans son intégralité ou, au moins partiellement, dans une phase de matrice externe. Par phase de matrice externe, on entend une phase de matrice formée en dernier, la plus éloignée des fibres du renfort. Dans ce dernier cas, la matrice peut être formée de plusieurs phases de natures différentes par exemple :
une matrice mixte C-SiC (le SiC étant du côté externe), ou
une matrice séquencée avec une alternance de phases SiC et de phases de matrice de moindre rigidité, par exemple en carbone pyrolytique (PyC), nitrure de bore (BN) ou carbone dopé au bore (BC), avec une phase terminale de matrice en SiC, ou
une matrice auto-cicatrisante avec des phases de matrice en carbure de bore (B₄C) ou en un système ternaire Si-B-C, éventuellement avec carbone libre (B₄C + C, Si-B-C + C), et avec une phase terminale Si-B-C ou SiC.

De tels matériaux CMC sont décrits notamment dans les documents US 5 246 736, US 5 965 266, US 6 291 058 et US 6 068 930.

La barrière environnementale comprend une couche de protection anti-corrosion 12 et une sous-couche d'accrochage 14 entre le substrat 10 et la couche 12.

La couche de protection anti-corrosion 12 comporte une couche extérieure 12a en un composé de type aluminosilicate d'élément alcalin ou alcalino-terreux, tel que BSAS. D'autres composés peuvent être envisagés, tels que CaO.Al₂O₃.(SiO₂)₂, ou CAS, (MgO)₂.(Al₂O₃)₂.(SiO₂)₅ ou MAS, BaO.Al₂O₃.SiO₂ ou BAS, SrO.Al₂O₃.SiO₂ ou SAS, 35BaO.15CaO.5Al₂O₃.10B₂O₃.35SiO₂, ou BCAS, ou encore des aluminosilicates d'éléments choisis parmi des terres rares, tous désignés ici par « composés de type aluminosilicate d'élément alcalin ou alcalino-terreux ou de terre rare ».

La couche de protection anti-corrosion comporte une couche intérieure 12b de barrière chimique en un mélange de mullite et du composé de la couche 12a, ici mullite + BSAS. La mullite est majoritaire et représente, en masse, de préférence entre 50% et 100%, de préférence environ 80%.

La sous-couche d'accrochage 14 a une composition qui varie de Si pratiquement pur, du côté du substrat, à mullite pratiquement pure (ou mullite pratiquement stoechiométrique 3Al₂O₃ - 2SiO₂), du côté de la couche de protection anti-corrosion. La variation de composition peut être sensiblement continue ou être par paliers. Avantageusement, la sous-couche d'accrochage se termine par une mince couche 14a de mullite pratiquement pure. Cette couche 14a a une épaisseur limitée, de préférence une épaisseur au plus égale à 50 µm. Du côté du substrat 10, la sous-couche d'accrochage peut débuter par une mince couche 14b de Si pratiquement pur favorisant l'accrochage chimique sur le substrat. La couche 14b a une épaisseur limitée, de préférence une épaisseur au plus égale à 50 µm. Cette épaisseur limitée, en relation avec le gradient de composition de la sous-couche 14 limite le risque de fissuration.

La couche de mullite 14a constitue une barrière de réaction chimique entre le composé type BSAS de la couche de protection anti-corrosion 12 et le Si de la couche d'accrochage 14.

Des variantes de réalisation sont illustrées par les figures 3 à 5. Les mêmes éléments des modes de réalisation des figures 2 à 5 portent les mêmes références numériques.

Dans le cas de la figure 3, la couche 12 de protection anti-corrosion est, de façon en soi connue, surmontée d'une couche de barrière thermique 16, par exemple en zircone modifiée par yttrium (ou zircone yttriée).

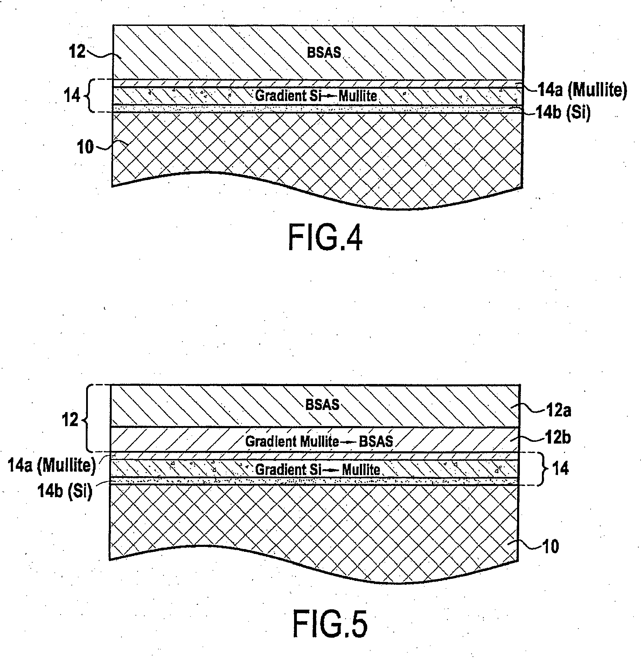

Dans le cas de la figure 4, la couche 12 de protection anti-corrosion est limitée à une couche de composé du type aluminosilicate d'élément alcalin ou alcalino-terreux ou de terre rare, par exemple une couche de BSAS, la couche finale en mullite 14a de la sous-couche d'accrochage formant barrière chimique vis-à-vis de Si.

Dans le cas de la figure 5, la couche intérieure 12b de la couche 12 de protection anti-corrosion a une composition qui varie de mullite pratiquement pure, du côté de la sous-couche d'accrochage, à BSAS ou autre composé similaire pratiquement pur du côté de la couche extérieure 12a, une telle couche 12b à gradient de composition offrant une tenue améliorée aux contraintes thermiques.

Le dépôt des différentes couches de la barrière environnementale peut être effectué par dépôt physique en phase vapeur, par exemple par projection plasma, ou plasma thermique, sous air et à pression atmosphérique, ou sous vide. Une couche à gradient de composition est alors formée en utilisant successivement des sources de compositions différentes ou en activant alternativement, pendant des durées variables, deux sources des constituants de la composition à déposer. On peut aussi utiliser, notamment pour la mullite, un processus de dépôt chimique en phase vapeur, ou CVD, éventuellement assisté par plasma, ou PE-CVD (pour « Plasma Enhanced-CVD »). Un dépôt à partir de poudres en suspension dans un liquide pourrait aussi être envisagé.

L'intérêt de la présence d'une sous-couche d'accrochage à gradient de composition entre Si et mullite, au regard de la tenue aux chocs thermiques ressortira des exemples ci-après.

### Exemple 1

Une barrière environnementale conforme à l'invention, du type représenté sur la figure 2, a été formée sur des substrats en matériau composite formés d'un renfort fibreux en fibres SiC produites par la société japonaise Nippon Carbon sous la référence « Hi-Nicalon » et d'une matrice autocicatrisante séquencée B₄C+C, SiC, Si-B-C+C obtenue par infiltration chimique en phase vapeur après dépôt d'une couche d'interphase PyC sur les fibres.

On a utilisé une technique de dépôt par projection par plasma thermique.

La sous-couche d'accrochage (14) à gradient de composition Si → mullite a été élaborée sous pression réduite en utilisant deux poudriers (réservoirs de poudre) de silicium et de poudre de mullite. Les conditions de dépôt ont été réglées pour former une couche (14b) de Si pur de 30 µm d'épaisseur, puis une couche de Si + mullite de 70 µm d'épaisseur avec augmentation progressive de la proportion de mullite, et ensuite une couche (14a) de mullite pure de 30 µm d'épaisseur.

La couche de protection anti-corrosion (12) a été élaborée sous pression atmosphérique. Une couche intérieure (12b) de 100 µm d'épaisseur a été obtenue à partir d'un mélange de poudres de mullite et de BSAS de composition massique 80/20 tandis qu'une couche extérieure de BSAS (12a) de 170 µm d'épaisseur a été obtenue à partir de poudre de BSAS.

### Exemple 2 (comparatif)

Une barrière environnementale selon l'art antérieur illustré par la figure 1 a été formée sur un substrat en même matériau composite que dans l'Exemple 1.

On a utilisé une technique de dépôt par projection par plasma thermique, comme dans l'Exemple 1.

Une sous-couche d'accrochage (4) en Si pur de 120 µm d'épaisseur et une couche de barrière (3) en mullite pure de 170 µm d'épaisseur ont été élaborées sous pressions réduites en utilisant des poudres de silicium et de mullite.

Une couche de protection anti-corrosion (2) de BSAS de 150 µm d'épaisseur a ensuite été élaborée sous pression atmosphérique avec un gaz plasma formé par un mélange d'argon et d'hélium, en utilisant de la poudre de BSAS.

### Essais 1

Des substrats revêtus des barrières obtenues selon les exemples 1 et 2 ont été soumis à des essais de choc thermique par introduction dans un four chauffé à 1200°C pendant 2 minutes et retour à l'air à température ambiante.

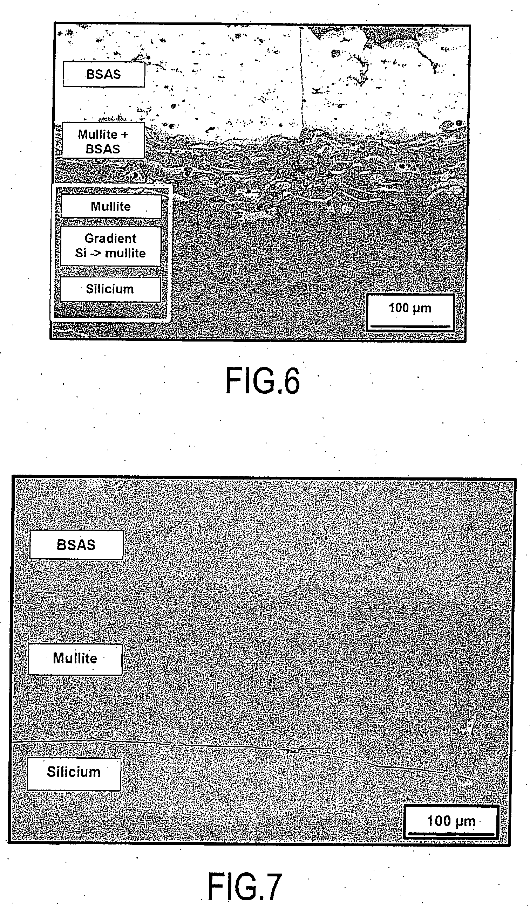

Après deux tels chocs thermiques, aucune fissuration de la sous-couche d'accrochage obtenue selon l'Exemple 1 n'a été observée, comme le montre la vue en coupe de la figure 6.

Par contre, une fissuration de la sous-couche d'accrochage Si de la barrière environnementale obtenue selon l'exemple 2 a été observée, comme le montre la figure 7.

### Essais 2

Des substrats revêtus de barrière environnementale selon l'exemple 1 ont été soumis respectivement :
- à un essai de corrosion par exposition à 1400°C sous flux d'air humide (700g d'eau par kg d'air) à une vitesse de 5 cm/s pendant 600 heures, et
- à un essai sévère de fatigue et de corrosion : sollicitation en traction sous un effort de 160 MPa à 1200°C pendant 30 heures, suivie d'une exposition à 1200°C sous un flux d'air humide (700g d'eau par kg d'air) à une vitesse de 2 cm/s pendant 250 heures.

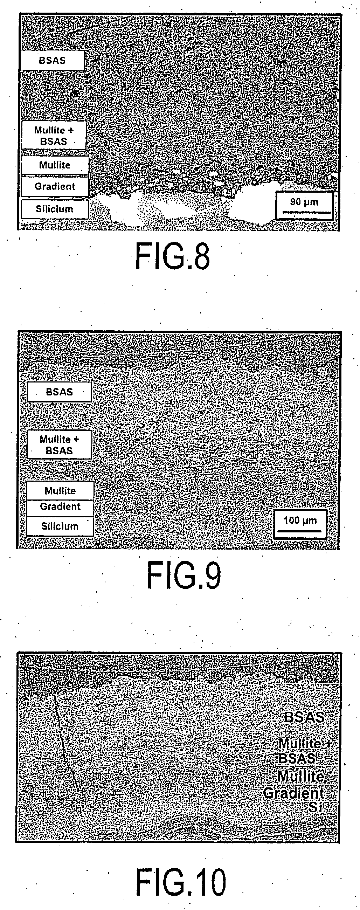

La figure 8 montre une photographie d'une coupe de la barrière environnementale après le premier de ces deux essais. On n'a pas observé de dégradation de la barrière environnementale.

Les figures 9 et 10 montrent des photographies de coupes de la barrière environnementale après le second de ces deux essais, la photographie de la figure 10 ayant été choisie en recherchant la présence d'une fissure. On remarque que la fissure visible sur la figure 10 n'affecte que partiellement la barrière environnementale, à partir de sa surface externe, la fissure se terminant dans la couche mixte silicium/mullite. Ainsi, cette couche mixte favorise une dissipation de l'énergie de fissuration, empêchant la fissure d'atteindre la mince couche de silicium formée sur la surface du substrat et d'induire un risque de décohésion de la barrière environnementale.

## Revendications

1. Pièce comportant un substrat (10) en matériau composite à matrice céramique contenant du silicium et une barrière environnementale formée sur le substrat et comprenant une couche extérieure (12) de protection anti-corrosion contenant un composé du type aluminosilicate d'élément alcalin ou alcalino-terreux ou de terre rare et une sous-couche d'accrochage (14) contenant du silicium et formée sur le substrat,
**caractérisée en ce qu'**entre le substrat (10) et la couche de protection anti-corrosion (12) est formée une sous-couche d'accrochage (14) dont la composition évolue de silicium sensiblement pur à mullite sensiblement pure entre une face interne, du côté du substrat, et une face externe, avec décroissance de la teneur en silicium et croissance de la teneur en mullite.

2. Pièce selon la revendication 1, **caractérisée en ce que** la sous-couche d'accrochage (14) à composition évolutive se termine, du côté de sa face externe, par une couche mince (14a) de mullite sensiblement pure.

3. Pièce selon la revendication 2, **caractérisée en ce que** la couche mince de mullite (14a) a une épaisseur au plus égale à 50 µm.

4. Pièce selon l'une quelconque des revendications 1 à 3, **caractérisée en ce que** la sous-couche d'accrochage (14) à composition évolutive débute, du côté de sa face interne, par une couche mince (14b) de silicium sensiblement pur formée sur le substrat.

5. Pièce selon la revendication 4, **caractérisée en ce que** la couche mince de silicium (14b) a une épaisseur au plus égale à 50 µm.

6. Pièce selon l'une quelconque des revendications 1 à 5, **caractérisée en ce que** la barrière environnementale comprend en outre une couche externe (16) de protection thermique formée sur la couche extérieure (12) de protection anti-corrosion.

7. Pièce selon l'une quelconque des revendications 1 à 6, **caractérisée en ce que** la barrière environnementale comprend une couche de protection anti-corrosion (12a) formée par un composé du type aluminosilicate d'élément alcalin ou alcalino-terreux ou de terre rare et une couche sous-jacente (12b) formée au-dessus de la sous-couche d'accrochage (14) et comportant une association de ce composé avec de la mullite.

8. Pièce selon la revendication 7, **caractérisée en ce que** ladite couche sous-jacente (12b) a une composition qui évolue entre mullite sensiblement pure à une face interne située du côté de la sous-couche d'accrochage (14) et sensiblement uniquement le composé formant la couche de protection anti-corrosion à une face externe située du côté de cette couche de protection anti-corrosion (12a), avec décroissance progressive de la teneur en mullite et croissance progressive de la teneur en ledit composé.

9. Pièce selon l'une quelconque des revendications 1 à 8, **caractérisée en ce qu'**elle constitue un composant de partie chaude de turbine à gaz.

10. Pièce selon l'une quelconque des revendications 1 à 9, **caractérisée en ce qu'**elle constitue au moins une partie de paroi de chambre de combustion de turbine à gaz.

## Patentansprüche

1. Teil, umfassend ein Substrat (10) aus Verbundwerkstoff mit siliziumhaltiger Keramikmatrix und eine Umgebungsbarriere, die auf dem Substrat gebildet ist und eine Korrosionsschutzaußenschicht (12), welche eine Verbindung vom Typ Aluminosilikat eines Alkali- oder Erdalkalielements oder von Seltene Erde enthält, sowie eine Haftunterlage (14), welche Silizium enthält und auf dem Substrat gebildet ist, umfasst,
**dadurch gekennzeichnet, dass** zwischen dem Substrat (10) und der Korrosionsschutzschicht (12) eine Haftunterlage (14) gebildet ist, deren Zusammensetzung sich zwischen einer Innenfläche, auf der Seite des Substrats, und einer Außenfläche von im Wesentlichen reinem Silizium zu im Wesentlichen reinem Mullit, unter Abnahme des Siliziumgehalts und Zunahme des Mullitgehalts, entwickelt.

2. Teil nach Anspruch 1, **dadurch gekennzeichnet, dass** die Haftunterlage (14) mit sich entwickelnder Zusammensetzung auf der Seite ihrer Außenfläche mit einer dünnen Schicht (14a) aus im Wesentlichen reinem Mullit abschließt.

3. Teil nach Anspruch 2, **dadurch gekennzeichnet, dass** die dünne Mullitschicht (14a) eine Dicke von höchstens gleich 50 µm aufweist.

4. Teil nach einem der Ansprüche 1 bis 3, **dadurch gekennzeichnet, dass** die Haftunterlage (14) mit sich entwickelnder Zusammensetzung auf der Seite ihrer Innenfläche mit einer dünnen Schicht (14b) aus im Wesentlichen reinem Silizium, die auf dem Substrat gebildet ist, beginnt.

5. Teil nach Anspruch 4, **dadurch gekennzeichnet, dass** die dünne Siliziumschicht (14b) eine Dicke von höchstens gleich 50 µm aufweist.

6. Teil nach einem der Ansprüche 1 bis 5, **dadurch gekennzeichnet, dass** die Umgebungsbarriere ferner eine äußere Wärmeschutzschicht (16), die auf der Korrosionsschutzaußenschicht (12) gebildet ist, umfasst.

7. Teil nach einem der Ansprüche 1 bis 6, **dadurch gekennzeichnet, dass** die Umgebungsbarriere eine Korrosionsschutzschicht (12a), die durch eine Verbindung vom Typ Aluminosilikat eines Alkali- oder Erdalkalielements oder von Seltene Erde gebildet ist, sowie eine darunterliegende Schicht (12b), die oberhalb der Haftunterlage (14) gebildet ist und eine Kombination aus dieser Verbindung mit Mullit umfasst.

8. Teil nach Anspruch 7, **dadurch gekennzeichnet, dass** die darunterliegende Schicht (12b) eine Zusammensetzung hat, die sich zwischen im Wesentlichen reinem Mullit auf einer auf der Seite der Haftunterlage (14) gelegenen Innenfläche und im Wesentlichen einzig und allein der Verbindung, welche die Korrosionsschutzschicht bildet, auf einer auf der Seite dieser Korrosionsschutzschicht (12a) gelegenen Außenfläche, unter schrittweiser Abnahme des Mullitgehalts und schrittweiser Zunahme des Gehalts an der Verbindung, entwickelt.

9. Teil nach einem der Ansprüche 1 bis 8, **dadurch gekennzeichnet, dass** es eine Komponente eines heißen Teils einer Gasturbine bildet.

10. Teil nach einem der Ansprüche 1 bis 9, **dadurch gekennzeichnet, dass** es wenigstens einen Wandteil einer Gasturbinenbrennkammer bildet.

## Claims

1. A part comprising a substrate (10) of ceramic matrix composite material containing silicon, and an environmental barrier formed on the substrate and comprising an outer anticorrosion protection layer (12) containing a compound of the type comprising an aluminosilicate of an alkali, or an alkaline-earth, or a rare-earth element, and a bond sub-layer (14) containing silicon and formed on the substrate,
the part being **characterized in that** a bond sub-layer (14) is formed between the substrate (10) and the anticorrosion protection layer (12), the composition of the bond sub-layer (14) varying from substantially pure silicon to substantially pure mullite between an inner face beside the substrate and an outer face, with the silicon content decreasing and the mullite content increasing.

2. A part according to claim 1, **characterized in that** the bond sub-layer (14) of varying composition terminates, beside its outside face, in a thin layer (14a) of substantially pure mullite.

3. A part according to claim 2, **characterized in that** the thickness of the thin layer of mullite (14a) is no greater than 50 µm.

4. A method according to any one of claims 1 to 3, **characterized in that** the bond sub-layer (14) of varying composition begins, beside its inner face, in a thin layer (14b) of substantially pure silicon formed on the substrate.

5. A part according to claim 4, **characterized in that** the thin layer (14b) of silicon has thickness of no more than 50 µm.

6. A part according to any one of claims 1 to 5, **characterized in that** the environmental barrier further comprises an outside thermal protection layer (16) formed on the outer anticorrosion protection layer (12).

7. A part according to any one of claims 1 to 6, **characterized in that** the environmental barrier comprises an anticorrosion protection layer (12a) formed by a compound of the type comprising an aluminosilicate of an alkali, or an alkaline-earth, or a rare-earth element, and an underlying layer (12b) formed on the bond sub-layer (14) and comprising an association of said compound together with mullite.

8. A part according to claim 7, **characterized in that** said underlying layer (12b) has a composition that varies between substantially pure mullite at an inner face situated beside the bond sub-layer (14) and substantially solely the compound forming the anticorrosion protection layer at an outer face situated beside said anticorrosion protection layer (12a), with the mullite content decreasing progressively and the content of said compound increasing progressively.

9. A part according to any one of claims 1 to 8, **characterized in that** it constitutes a component of a hot portion of a gas turbine.

10. A part according to any one of claims 1 to 9, **characterized in that** it constitutes at least a portion of a wall of a gas turbine combustion chamber.
